# EUROPEAN PATENT SPECIFICATION

(11) **EP 2 112 885 B1**
(45) Date of publication and mention of the grant of the patent: **14.10.2015**
(21) Application number: 08712618.1
(22) Date of filing: 19.02.2008
(51) Int. Cl.: A21D 2/36, A23L 1/212, A23L 1/314, A23L 1/325, A21D 13/00

(54) **METHOD FOR MAKING A FOODSTUFF**
VERFAHREN ZUR HERSTELLUNG EINES NAHRUNGSMITTELS
PROCÉDÉ DE FABRICATION D'UN ALIMENT

(30) Priority: 20.02.2007 NL 2000497
(43) Date of publication of application: 04.11.2009
(73) Proprietor: Provalor BV, 1645 RA Ursum (NL)
(72) Inventor: KOSTERS, Paulus, Statius, Reinier, NL-7235 VN Apeldoorn (NL); NELL, Pieter, Coenraad, NL-1645 RA Ursem (NL)
(74) Representative: Uittenbogaart, Gustaaf Adolf
(86) International application number: PCT/NL2008/050092
(87) International publication number: WO 2008/105657

(56) References cited:
- WO-A-02/07530
- WO-A-96/29891
- FR-A- 2 247 168
- US-A- 3 903 313
- DATABASE WPI Week 200040 Derwent Publications Ltd., London, GB; AN 2000-452774 XP002479069 & CN 1 242 158 A (SU J) 26 January 2000 (2000-01-26) & DATABASE EPODOC EUROPEAN PATENT OFFICE, THE HAGUE, NL; 1998, SU JIRONG: "Instant noodle containing vegetables" XP002479067
- DATABASE FSTA [Online] INTERNATIONAL FOOD INFORMATION SERVICE (IFIS), FRANkFURT-MAIN, DE; 1985, BARANOV V S ET AL: "Production of unleavened dough." XP002479065 Database accession no. 87-1-07-v0088
- DATABASE WPI Week 200424 Derwent Publications Ltd., London, GB; AN 2004-255770 XP002479068 & RU 2 220 576 C2 (KHLEBOZAVOD NO 2 STOCK CO) 10 January 2004 (2004-01-10) & DATABASE EPODOC EUROPEAN PATENT OFFICE, THE HAGUE, NL; 2004, KORCHAGIN V I: "Bakery food production method" XP002479066

## Description

Tests have shown that dejuiced vegetable is surprisingly well suited for processing into food products for human consumption as a source of gluten-free food fibres and for imparting a better structure to food products.

The use of food fibres in foodstuffs is rapidly gaining popularity, owing to their health-promoting effect. The disadvantage of the known food fibres is that the fibres used often contain gluten, which can provoke allergic reactions in some consumers. The use of dejuiced vegetable is a surprisingly simple way of being able to use gluten-free fibres in foodstuffs for human consumption.

CN1242158 discloses a vegetable instant noodle which is made from mixing wheat flour and vegetable pulp, then the mixture is calendered several times to form noodle which retains the nutrient ingredients of the vegetable and is good in mouth feel. The vegetable pulp is made by washing the vegetable and crushing the vegetable into vegetable pulp. In CN1242158 the vegetable pulp obtained after crushing is used as such without any separation of juice, and the vegetable pulp is simply mixed with wheat flour.

WO 02/07530 discloses a foodstuff for humans or animals, made from plant raw materials, with a fresh taste, essentially corresponding to the fresh taste of the plant raw material. The foodstuff comprises a matrix of comminuted, plant raw materials which contains hydrocolloids with no starch, and which is of stable form and is packed in an airtight manner. The document discloses that the preparation of the matrix of comminuted plant raw materials may optionally include dejuicing of the raw materials.

The examples of WO 02/07530 that specify the water content of a dejuiced fruit mixtures are example 1 (apple and blackberries) and example 4 (apple and kiwi), wherein 50:50 mixtures are comminuted and dejuiced to produce a pulp with 80% water and 20% of dry mass. If a calculation is performed using a typical water content of apples, 84%, the content of water in the dejuiced fruit mixtures of the described examples would mean that dejuicing reduces the weight of the fruit to approximately 80% of its original weight.

WO 96/29891 relates to the preparation of a food product containing dejuiced vegetable pulp. In particular, Example 1 describes apples which are cored and peeled, chopped into small portions and passed into a juice extractor, the resulting pulp is passed through a drying tunnel. The same method is used for carrots which are first washed and then subject to top and tip cutting operations (Example 5). The drying process, which is an essential part of the described process and which follows the dejuicing, is the removal of water through evaporation and this process results in irrevocable structural changes to the product.

The invention relates to a method for making a dejuiced vegetable according to the pre-characterizing part of Claim 1. Such a method is known from WO 9629891. The dejuiced vegetable, which is mixed into the food product by the known method, is dried to obtain a more or less crumbly product immediately after dejuicing, so that it can be mixed into the mixture of ingredients without kneading. The dejuiced vegetable according to the prior art is not finely ground and the drying of the dejuiced vegetable prior to adding to the food product results in a vegetable product that has properties that are not fully reversible, upon e.g. rehydration of the dried material. The known dried vegetable product as an additive for protein containing ingredients teaches away from adding food vegetable pulp that has a high moisture content and a similar (micro)structure as the original vegetable. A further drawback of the known method for making the known dejuiced vegetable is that the drying of the dejuiced vegetable needs extra energy.

In order to eliminate these disadvantages, the method is carried out in accordance with the characterizing part of Claim 1. This makes the dejuiced vegetable suitable for mixing with the protein-containing ingredients by kneading.

According to one embodiment, the method is carried out in accordance with Claim 2. These specified vegetables are highly suitable for making into dejuiced vegetables and for kneading into the protein-containing ingredients.

According to one embodiment, the method is carried out in accordance with Claim 3. When, prior to dejuicing, the vegetable is finely ground to obtain a pumpable product, the dejuicing is simpler, the remaining dejuiced vegetable can be readily processed into food products, and the food products acquire a fine texture.

According to one embodiment, the method is carried out in accordance with Claim 4. When, prior to dejuicing, the fresh vegetable is comminuted into fine particles, the dejuicing is easier, the remaining dejuiced vegetable can be readily processed into food products, and the food products acquire a fine texture, possibly after heating.

According to one embodiment, the method is carried out in accordance with Claim 5. This inactivates the enzymes, stabilizes the microbes, and improves the extraction of the juice from the vegetable.

According to one embodiment, the method is carried out in accordance with Claim 6. Preservation of the dejuiced vegetable ensures that the dejuiced vegetable need not be used immediately and that the dejuiced vegetable can also be for example transported to a processing site. When the dejuiced vegetable is then added to the food product without further processing, as much of the nutrients from the vegetable is retained as possible.

The invention further concerns a method in accordance with Claim 7. Making a food product using the dejuiced vegetable as an additive leads to a food product with a good texture.

According to one embodiment, the method is carried out in accordance with Claim 8. This achieves a reasonable reduction in the fats and proteins in the food product, with an increased amount of gluten-free food fibres so that a health effect can be expected of the food product.

The invention also includes an ingredient in accordance with Claim 10. Such ingredients make a whole new series of food products possible, which have health-promoting effects and acquire a good texture by the application of simple measures.

According to one embodiment, the ingredients are composed in accordance with Claim 11. As a result, the enzymes in the ingredients are inactivated and/or the microbes are stabilized without affecting the flavour of the ingredients, so that further processing is simplified.

The invention also includes a dough or paste in accordance with the pre-characterizing part of Claim 12. The use of vegetable in the dough or paste for the production of, for example, meat products is known from US 5766667. This document mentions the use of liquefied vegetable in the preparation of meat blocks. The drawback of the known method is that all of the vegetable is used, so that the moisture introduced with the vegetable, including the carbohydrates present in it, is taken up in the dough or paste. As a result, the foodstuff lacks sufficient texture and/or firmness.

The use of vegetable in the dough or paste for the production of foodstuffs is also known for example from US 3903313. In this document, the vegetable is first dewatered and then added as dry matter to the dough or paste. The drawback of this method is that a great deal of energy is needed for dewatering.

To eliminate the drawbacks mentioned above, the dough or paste is made in accordance with Claim 13. When vegetable is added in the form of dejuiced vegetable, all the required nutrients from the vegetable are introduced into the dough, and the dough or paste is kneadable and acquires a better texture and/or firmness, because a major part of the moisture present in the vegetable, with the carbohydrates dissolved in it, has been removed with the juice extracted.

According to one embodiment, the dough or paste is made in accordance with Claim 13. It has been found that a dejuiced vegetable with this composition readily mixes with the other ingredients of the dough or paste, as a result of which the foodstuff acquires a good texture and/or firmness.

According to one embodiment, the dough or paste is made in accordance with Claim 14. When the vegetable is comminuted to obtain small particles, the dejuiced vegetable acquires a structure that makes it easy to mix with the dough or paste, so that the original structure of the vegetable is no longer fully visible in the foodstuff, but the dejuiced vegetable still contributes to the texture and/or firmness of the foodstuff.

The invention also includes meat products in accordance with Claim 15. Warming the dough or paste achieves cohesion between the finely ground meat and the other ingredients, so that the meat products can be easily cut and have the required firmness. The meat products thus obtained contain less fat and proteins and more gluten-free food fibres and more moisture, so that they also have a lower calorie content and are therefore healthier.

The invention also includes bread and pastry products in accordance with Claim 16. Bread and pastry products made with dejuiced vegetable have extra nutrients of plant origin and extra gluten-free food fibres, so they have more texture and/or firmness.

The invention also includes fried, baked and roasted products in accordance with Claim 17. The fried products prepared with dejuiced vegetable contain extra nutrients of plant origin and extra gluten-free food fibres, so they have a better texture and/or firmness.

The invention is explained in more detail below with the aid of some examples.

Dejuiced carrot and other dejuiced vegetables were added to sausage products, meat products (including liver sausage) and bread in an amount of up to 23% of the mixture. The dejuiced vegetable was mixed into the sausage products, meat products or bread with the moist vegetable having a moisture content of at least 55% being kneaded into the dough or paste of the sausage products, meat products or bread. This kneading achieves a complete mixing of the dejuiced vegetable with the dough or paste, so the dejuiced vegetable adhered well to the dough or paste. The dejuiced vegetable ensured a surprisingly good texture, firmness and flavour experience. The influence exerted on the flavour and colour was naturally connected with the type of dejuiced vegetable used. In a vegetarian product, the undesirable perception of soya-bean flavour was adequately masked by the added dejuiced vegetable.

The washed vegetable or vegetable residue was ground in a coarsely cutting mill and possibly in a finely cutting mill in order to obtain a pumpable product. In the process, the vegetable acquired an average particle size of between 0.7 and 2.5 mm or a particle size where 80% of the particles were smaller than 2.5 mm. The finely ground product was transported further by pumping.

The pumpable product was optionally heated briefly to 70-75°C in a heat exchanger, giving an enzymatically stable product, whose plant cells had been opened up. This made the extraction of the juice easier. Any enzymes present were inactivated in this process, and the microbes are stabilized. This heating led to transformations in the crude vegetable, which could be recognized in the dejuiced vegetable formed in a decanter where the vegetable juice was separated off.

The finely ground and possibly heated vegetable was pumped into a decanter, a press or a centrifuge, where the vegetable juice was separated from the vegetable. The vegetable juice contained the readily soluble constituents, such as sugars. The insoluble constituents mainly stayed in the dejuiced vegetable, while the other constituents were distributed over the vegetable juice and the dejuiced vegetable. In the separation of the vegetable juice, the decanter, the press or the centrifuge was adjusted such that the dejuiced vegetable had a moisture content of 55% or more, so that the dejuiced vegetable is easy to mix and knead with protein-containing materials, such as a dough or paste.

The production of carrot juice started with carrots containing about 1% of protein, 0.2% of fat, 5.2% of carbohydrates (including sugars), 3.4% of fibres, 2.0% of other dry matter and about 88% of water. The removal of the carrot juice, which contained about 7.5% of carbohydrates (including sugars), 2% of other dry matter and about 90% of water, left behind a dejuiced vegetable consisting of about 2.9% of protein, 0.6% of fat, 5.2% of carbohydrates (including sugars), 9.7% of fibres, 2% of other dry matter and about 84% of water. In this example, 650 grams of carrot juice were removed from 1000 grams of carrots, and 350 grams of dejuiced carrot remained.

The data above refer to carrots but are also representative of other vegetables, such as pepper, cauliflower, broccoli, leek, beetroot, cucumber, and various types of lettuce and cabbage (Brassica), but the values vary with the type of vegetable and the season.

The finely ground vegetable can be juiced in a separating device, such as a decanter as mentioned above. The use of other devices, such as a press or a centrifuge, is also possible.

The vegetable juice obtained was removed through pipes, possibly pasteurized or preserved in another way, and then placed in packets, tins or bottles, or otherwise transported to the consumer.

The dejuiced vegetable was allowed to fall by gravity as a moist product from the separating device onto a conveyor belt or into the trough of a screw conveyor in order to transport it to a container for further processing. The dejuiced vegetable was optionally cooled or mixed with a preservative, or else treated by another method in order to reduce its microbial count.

The dejuiced vegetable collected in the containers can be processed directly by the method described below. The dejuiced vegetable is generally transported to another plant or another location for intermediate storage at a low temperature. The containers filled with the dejuiced vegetable are closed here with lids in order to keep the dejuiced vegetable under hygienic conditions. Other measures aimed at the maintenance of hygiene can also be applied.

In a test, the dejuiced vegetable was mixed with fat, water and protein (in the form of finely comminuted meat), as well as with processing aids, such as starch, in order to produce a dough or paste. In this example, the dough or paste contained 23% of dejuiced carrot; lower percentages were also tried successfully, and higher percentages are also expected to be possible. The dough or paste was filled into a sausage case to produce a sausage; this case was tied off and the sausage was heated in a water bath of 85°C for a few hours. After cooling, the sausage was found to have a surprisingly good texture, a good colour, an interesting taste and the required moisture content. The addition of about 20% of dejuiced carrot to a Dutch-type salami was found to raise the average moisture content of the latter from 57% to about 63% without altering its texture.

In another test, the dough was made with flour and water and contained 20% of dejuiced carrot. The dough was used to bake bread in an oven, which had an excellent flavour and a very good texture and structure. Biscuits were also baked and puff pastry prepared in a similar way. The use of gluten-free flour in combination with the dejuiced vegetable gave a high-fibre bread that was free of gluten. This enables people with a gluten allergy to eat bread and other bakery products that stimulate the intestinal activity.

In another application, the dejuiced vegetable was added to a paste for making rissoles and croquettes. The dejuiced vegetable can ensure here too the right texture for the fried product, and the amounts of fibres, fat and carbohydrates can be favourably affected.

## Claims

1. Method for making a dejuiced vegetable for a food product that is suitable for human consumption, has a firm texture and is made from a mixture of protein-containing ingredients and the dejuiced vegetable by kneading the dejuiced vegetable into the protein containing ingredients, **characterized in that** the dejuiced vegetable is made by finely grinding a vegetable and after that extracting vegetable juice from the finely ground vegetable in a separating device, such as a decanter, a press or a centrifuge until less than 50 wt% of the original amount of vegetable remains as dejuiced vegetable and before the moisture content of the dejuiced vegetable falls below 55%.

2. Method according to Claim 1, whereby the vegetable is selected from at least one of carrots, peppers, cauliflower, broccoli, leek, beetroot, cucumber, lettuce and cabbage (Brassica).

3. Method according to Claim 1 or 2, whereby prior to dejuicing, the vegetable is finely ground such that the finely ground vegetable is a pumpable product.

4. Method according to Claim 3, whereby 80% of the particles of the pumpable product have a size smaller than 2.5 mm or whereby the finely ground vegetable has an average particle size between 0.7 and 2.5 mm.

5. Method according to any one of the preceding claims, whereby the vegetable is heated for a short time prior to dejuicing.

6. Method according to any one of the preceding claims, whereby, directly after the extraction of the juice, the dejuiced vegetable is cooled and/or temporarily preserved in some other way and/or stored before being added to the protein-containing ingredients.

7. Method for making a food product that is suitable for human consumption, has a firm texture and is made from a mixture of protein-containing ingredients and a dejuiced vegetable, the method comprising kneading the the dejuiced vegetable obtained by a method according to one of the Claims 1-6 into the protein containing ingredients.

8. Method according to Claim 7, whereby the food product with a firm texture is made of a mixture of protein-containing ingredients and at least 5 wt.% of the dejuiced vegetable, in particular at least 20 wt% of dejuiced vegetable.

9. Method in accordance with Claim 7 or 8 whereby the food product is a dough or paste containing protein, fat, starch, processing aids and the vegetable ingredient, whereby the dough or paste is heated for some time after the addition of the dejuiced vegetable.

10. Ingredient for addition to food products suitable for human consumption, comprising a dejuiced vegetable obtainable by a method according to any one of the Claims 1-6.

11. Ingredient according to Claim 10, whereby the dejuiced vegetable is subjected to an after-treatment to reduce its microbial count.

12. Dough or paste used for making food products suitable for human consumption, which dough or paste is composed of protein, fat, starch, processing aids and vegetable, amongst other ingredients, **characterized in that** the vegetable is added in the form of a kneadable dejuiced vegetable obtainable by a method according to any one of the Claims 1-6.

13. Dough or paste according to Claim 12, whereby the fibre content of the dejuiced vegetable is at least twice as high as the fibre content of the vegetable.

14. Dough or paste according to Claim 12 or 13, whereby 80% of the particles of the dejuiced vegetable have a size smaller than 2.5 mm.

15. Meat products made from or containing the paste according to any one of Claims 12-14, whereby the paste is partly composed of finely ground meat, and whereby the paste preferably has been warmed for a few hours at most.

16. Bread or pastry products made from or containing the dough according to any one of Claims 12-14, whereby the dough has been baked in an oven.

17. Products for frying, baking or roasting, such as rissoles, spring rolls and fish-fingers, made from or containing the paste according to any one of Claims 12-14, whereby the product is cooked in frying oil or in an oven.

## Patentansprüche

1. Verfahren zum Herstellen eines entsafteten Gemüses für ein Nahrungsmittelprodukt, welches geeignet ist von Menschen konsumiert zu werden, aufweisend eine feste Textur und hergestellt aus einer Mischung von proteinbeinhaltenden Zutaten und aus dem entsafteten Gemüse durch Kneten des entsafteten Gemüses in die proteinbeinhaltenden Zutaten, **dadurch gekennzeichnet, dass** das entsaftete Gemüse hergestellt ist durch feines Zerkleinern eines Gemüses und anschließendem Extrahieren des Gemüsesaftes von dem stark zerkleinerten Gemüses in eine separate Vorrichtung, wie ein Dekanter, eine Presse oder eine Zentrifuge bis weniger als 50 Gew.-% der ursprünglichen Menge des Gemüses als entsaftetes Gemüse übrig sind und bevor der Feuchtigkeitsgehalt des entsafteten Gemüses unter 55 % fällt.

2. Verfahren nach Anspruch 1, wobei das Gemüse aus zumindest einer/einem von mehreren Karotten, Paprikaschoten, Blumenkohl, Brokkoli, Lauch, Rotebeete, Gurke, Salat und Kohl (Brassicas) ausgewählt ist.

3. Verfahren nach Anspruch 1 oder 2, wobei vor dem Entsaften das Gemüse fein zerkleinert wird, sodass das fein zerkleinerten Gemüse ein pumpbares Produkt ist.

4. Verfahren nach Anspruch 3, wobei 80 % der Partikel des pumpbaren Produkts eine Größe kleiner als 2.5 mm aufweisen oder wobei das fein zerkleinerten Gemüse eine durchschnittliche Partikelgröße zwischen 0.7 und 2.5 mm aufweist.

5. Verfahren nach einem der vorhergehenden Ansprüche, wobei das Gemüse während eine kurze Zeit vor dem Entsaften erhitzt wird.

6. Verfahren nach einem der vorhergehenden Ansprüche, wobei das entsaftete Gemüse direkt nach dem Extrahieren des Saftes gekühlt und/oder temporär auf eine anderer Weise präserviert wird und/oder aufbewahrt wird bevor es zu den proteinenthaltenden Zutaten hinzugefügt wird.

7. Verfahren zum Herstellen eines Nahrungsmittelprodukts, welches geeignet ist von Menschen konsumiert zu werden, aufweisend eine feste Textur und hergestellt aus eine Mischung von proteinbeinhaltenden Zutaten und einem entsafteten Gemüse, das Verfahren aufweisend Kneten des entsafteten Gemüses in die proteinenthaltenden Zutaten, das Gemüse Erhalten durch ein Verfahren gemäß einem der Ansprüche 1 - 6.

8. Verfahren nach Anspruch 7, wobei das Nahrungsmittelprodukt mit einer festen Textur aus einer Mischung von proteinenthaltenden Zutaten und zumindest 5 Gew.-% des entsafteten Gemüses, insbesondere 20 Gew.-% des entsafteten Gemüses, hergestellt ist.

9. Verfahren nach Anspruch 7 oder 8, wobei das Nahrungsmittelprodukt ein Teig oder eine Paste ist, welche Proteine, Fett, Stärke, Verarbeitungshilfsstoffe und Gemüsezutaten enthält, wobei der Teig oder die Paste für einige Zeit nach der Zugabe des entsafteten Gemüses erhitzt wird.

10. Zutat für die Zugabe zu Nahrungsmittelprodukten, geeignet um durch Menschen konsumiert zu werden, aufweisend ein entsaftetes Gemüse, erhältlich durch ein Verfahren gemäß einer der Ansprüche 1 - 6.

11. Zutat nach Anspruch 10, wobei das entsaftete Gemüse einer Nachbehandlung unterzogen wird, um seine Keimzahl zu reduzieren.

12. Teig oder Paste, verwendet zum Herstellen von Nahrungsmittelnprodukten, geeignet um von Menschen konsumiert zu werden, wobei sich der Teig oder die Paste aus, Protein, Fett, Stärke, Verarbeitungshilfsstoffen und Gemüse nebst anderer Zutaten zusammensetzt, **dadurch gekennzeichnet, dass** das Gemüse in Form eines knetbaren entsafteten Gemüses, erhältlich durch ein Verfahren gemäß einem der Ansprüche 1 - 6, hinzugegeben wird.

13. Teig oder Paste nach Anspruch 12, wobei der Faserinhalt des entsafteten Gemüses mindestens zweimal so groß ist wie der Anteil des Faserinhalts des Gemüses.

14. Teig oder Paste nach Anspruch 12 oder 13, wobei 80 % der Partikel des entsafteten Gemüses eine Größe kleiner als 2.5 mm aufweisen.

15. Fleischprodukte, hergestellt aus der oder beinhaltend die Paste nach einem der Ansprüche 12 - 14, wobei die Paste teilweise aus stark zerkleinerten Fleisch zusammengesetzt ist, und wobei die Paste bevorzugt höchstens für einige Stunden erhitzt wurde.

16. Brot oder Pastenprodukte hergestellt oder bestehend aus dem Teig nach einem der Ansprüche 12 - 14, wobei der Teig in einem Ofen gebacken worden ist.

17. Produkte zum Fritten, Backen oder Braten, wie Frikadellen, Frühlingsrollen und Fischstäbchen, hergestellt aus oder beinhaltend die Paste gemäß einem der Ansprüche 12 - 14, wobei das Produkt in Frittüre gekocht oder in einem Ofen gebacken wird.

## Revendications

1. Procédé de production d'un légume dont le jus est extrait pour un produit alimentaire qui est approprié à la consommation humaine, a une texture ferme et est fabriqué à partir d'un mélange d'ingrédients contenant des protéines et du légume dont le jus est extrait par pétrissage du légume dont le jus est extrait dans les ingrédients contenant des protéine, **caractérisé en ce que** le légume dont le jus est extrait est fabriqué en hachant finement un légume et après l'extraction du jus de légumes à partir du légume finement haché dans un dispositif de séparation, tel qu'un décanteur, une presse ou une centrifugeuse jusqu'à ce que moins de 50% en poids de la quantité initiale de légume reste en tant que légume dont le jus est extrait et avant que la teneur en eau du légume dont le jus est extrait tombe en dessous de 55%.

2. Procédé selon la revendication 1, dans lequel le légume est choisi parmi au moins des carottes, des poivrons, du chou-fleur, du brocoli, du poireau, de la betterave, du concombre, de la laitue et du chou (Brassica).

3. Procédé selon la revendication 1 ou 2, dans lequel avant l'extraction du jus, le légume est finement haché de sorte que le légume finement haché soit un produit pompable.

4. Procédé selon la revendication 3, dans lequel 80% des particules du produit pompable ont une dimension inférieure à 2,5 mm ou dans lequel le légume finement haché a une dimension moyenne de particules comprise entre 0,7 et 2,5 mm.

5. Procédé selon l'une quelconque des revendications précédentes, dans lequel le légume est chauffé pendant une courte période avant l'extraction du jus.

6. Procédé selon l'une quelconque des revendications précédentes, dans lequel, directement après l'extraction du jus de fruit, le légume dont le jus est extrait est refroidi et/ou temporairement conservé d'une autre manière et/ou stocké avant d'être ajouté aux ingrédients contenant des protéines.

7. Procédé de production d'un produit alimentaire qui est approprié à la consommation humaine, a une texture ferme et est fabriqué à partir d'un mélange d'ingrédients contenant des protéines et d'un légume dont le jus est extrait, le procédé comprenant le pétrissage du légume dont le jus est extrait obtenu par un procédé selon l'une des revendications 1 à 6 dans les ingrédients contenant des protéines.

8. Procédé selon la revendication 7, dans lequel le produit alimentaire avec une texture ferme est fabriqué d'un mélange d'ingrédients contenant des protéines et au moins 5% en poids du légume dont le jus est extrait, en particulier au moins 20% en poids du légume dont le jus est extrait.

9. Procédé selon la revendication 7 ou 8, dans lequel le produit alimentaire est une pâte ou une crème contenant des protéines, de la graisse, de l'amidon, des adjuvants de traitement et un ingrédient végétal, dans lequel la pâte ou la crème est chauffée pendant un certain temps après l'ajout du légume dont le jus est extrait.

10. Ingrédient destiné à être ajouté à des produits alimentaires approprié à la consommation humaine, comprenant un légume dont le jus est extrait pouvant être obtenu par un procédé selon l'une quelconque des revendications 1 à 6.

11. Ingrédient selon la revendication 10, dans lequel le légume dont le jus est extrait est soumis à un post-traitement pour réduire sa numération microbienne.

12. Pâte ou crème utilisée pour la production de produits alimentaires appropriés à la consommation humaine, laquelle pâte ou crème se compose de protéines, de graisses, d'amidon, des adjuvants de traitement et de légumes, entre autres ingrédients, **caractérisé en ce que** le légume est ajouté sous la forme d'un légume pétrissable dont le jus est extrait pouvant être obtenu par un procédé selon l'une quelconque des revendications 1 à 6.

13. Pâte ou crème selon la revendication 12, dans laquelle la teneur en fibres du légume dont le jus est extrait est au moins deux fois aussi élevée que la teneur en fibres du légume.

14. Pâte ou crème selon la revendication 12 ou 13, dans laquelle 80% des particules du légume dont le jus est extrait ont une dimension inférieure à 2,5 mm.

15. Produits de viande fabriqués à partir de la crème selon l'une quelconque des revendications 12 à 14 ou contenant celle-ci, dans lesquels la crème est partiellement composée de viande finement hachée, et dans lesquels la crème a été chauffée de préférence pendant quelques heures au plus.

16. Produits de boulangerie ou de pâtisserie fabriqués à partir de la pâte selon l'une quelconque des revendications 12 à 14 ou contenant celle-ci, dans lesquels la pâte a été cuite dans un four.

17. Produits pour la friture, la cuisson ou le rôtissage, tels que des boulettes, des rouleaux de printemps et des doigts de poisson, fabriqués à partir de la crème selon l'une quelconque des revendications 12 à 14 ou contenant celle-ci, dans lesquels le produit est cuit dans l'huile de friture ou au four.
